# FASCICULE DE BREVET EUROPEEN

(11) **EP 3 177 467 B1**
(45) Date de publication et mention de la délivrance du brevet: **26.09.2018**
(21) Numéro de dépôt: 15753734.1
(22) Date de dépôt: 31.07.2015
(51) Int. Cl.: B60D 1/01, B60D 1/44, B60D 1/48, B60D 1/00

(54) **ENSEMBLE DE CHARIOTS CONFIGURÉ POUR ÊTRE REMORQUÉ**
REIHE VON WAGEN MIT SCHLEPPKONFIGURATION
SET OF TROLLEYS CONFIGURED TO BE TOWED

(30) Priorité: 04.08.2014 FR 1457560
(43) Date de publication de la demande: 14.06.2017
(73) Titulaire: LABADIS SAS, 53000 Laval (FR)
(72) Inventeur: LABADIE, Jean, 53000 Laval (FR)
(74) Mandataire: Santarelli
(86) Numéro de dépôt international: PCT/FR2015/052121
(87) Numéro de publication internationale: WO 2016/020608

(56) Documents cités:
- WO-A2-2006/050390
- DE-U1-202008 012 180
- US-A1- 2005 206 106

## Description

L'invention a trait d'une façon générale aux chariots et plus particulièrement aux ensembles qui comportent une pluralité de chariots attelés les uns aux autres et qui sont configurés pour être remorqués.

On connaît déjà un tel ensemble par la demande de brevet français 2 800 676. Dans l'ensemble décrit par ce document, chaque attelage entre deux chariots successifs comporte un crochet et un timon mobiles à coulissement l'un par rapport à l'autre entre une position rétractée de l'attelage dans laquelle les deux chariots successifs attelés l'un à l'autre sont rapprochés et une position déployée dans laquelle les deux chariots successifs attelés l'un à l'autre sont éloignés, grâce à quoi l'ensemble de chariots admet une configuration compacte dans laquelle les chariots sont rapprochés les uns des autres et une configuration de remorquage dans laquelle les chariots sont éloignés les uns des autres.

La configuration compacte de l'ensemble, que rend possible le caractère télescopique de chaque attelage, permet de stocker ou de transporter l'ensemble, par exemple dans un camion ou dans un monte-charge, sans perte de place puisque les chariots sont alors les uns contre les autres.

L'ensemble de chariots prend la configuration de remorquage lorsqu'il est remorqué suivant une direction de déplacement prédéterminée en tirant sur un premier côté d'un chariot d'extrémité. Ce premier côté est opposé, suivant la direction de déplacement, à un deuxième côté où se trouve l'attelage entre le chariot d'extrémité et le chariot suivant.

Chaque chariot autre que le chariot d'extrémité présente un premier côté où se trouve l'attelage avec le chariot qui le précède et un deuxième côté qui est opposé, suivant la direction de déplacement, au premier côté.

Chaque chariot de l'ensemble comporte un premier couple de roues du premier côté et un deuxième couple de roues du deuxième côté. Les roues du premier couple de roues de chacun des chariots sont librement orientables et les roues du deuxième couple de roues de chacun des chariots sont maintenues orientées suivant la direction de déplacement. Les chariots ne comportent aucune autre roue.

Il est entendu que dans le présent mémoire, l'orientation d'une roue doit être comprise comme l'orientation de son plan général.

Cet agencement des roues et l'écart existant entre les chariots dans la configuration de remorquage permet à l'ensemble de chariots d'être facilement manoeuvré quand l'ensemble est déplacé en étant tiré par le premier côté du chariot d'extrémité : grâce à l'écart existant entre les chariots, les chariots peuvent changer d'orientation sans se gêner les uns les autres ; grâce à la liberté d'orientation des roues du premier couple (qui sont en avant), chaque chariot peut aisément changer d'orientation ; et grâce au maintien de l'orientation des roues du deuxième couple (qui sont en arrière), chaque chariot reste sur sa trajectoire, sans dérive latérale.

Cet ensemble de chariots est particulièrement apprécié en raison tout à la fois de sa compacité lors du stockage ou du transport et de son excellente manoeuvrabilité lorsqu'il est remorqué.

L'invention vise à accroitre les possibilités d'utilisation d'un tel ensemble de chariots.

Elle propose à cet effet un ensemble de chariots configuré pour être remorqué, comportant un premier chariot et un deuxième chariot s'étendant chacun suivant une direction de déplacement prédéterminée entre un premier côté et un deuxième côté,
le premier chariot et le deuxième chariot étant reliés par un attelage se trouvant du deuxième côté du premier chariot et du premier côté du deuxième chariot, lequel attelage comporte un crochet et un timon mobiles à coulissement l'un par rapport à l'autre pour que l'attelage admette une position déployée dans laquelle le deuxième côté du premier chariot et le premier côté du deuxième chariot sont éloignés l'un de l'autre et pour que l'attelage admette une position rétractée dans laquelle le deuxième côté du premier chariot et le premier côté du deuxième chariot sont rapprochés l'un de l'autre,
le premier chariot et le deuxième chariot comportant chacun du premier côté un premier couple de roues et comportant chacun du deuxième côté un deuxième couple de roues,
caractérisé en ce que le premier chariot et le deuxième chariot sont configurés pour coopérer de sorte qu'au moins l'un d'eux, appelé chariot à relation au sol modifiable, a une relation au sol différente suivant que l'attelage est en position déployée ou en position rétractée :
- lorsque l'attelage est en position déployée, le premier chariot et le deuxième chariot ont chacun une relation au sol nominale dans laquelle les roues du premier couple de roues sont au contact du sol et librement orientables et les roues du deuxième couple de roues sont au contact du sol et maintenues orientées suivant ladite direction de déplacement, et
- lorsque l'attelage est en position rétractée, le premier chariot et le deuxième chariot ont chacun ladite relation au sol nominale sauf que le chariot à relation au sol modifiable a les roues du deuxième couple de roues qui sont soulevées pour être hors de contact du sol ou qui sont librement orientables.

Grâce à la modification de la relation au sol du ou des chariot(s) à relation au sol modifiable, l'ensemble selon l'invention peut être déplacé avec des qualités de manoeuvrabilité élevées non seulement lorsqu'il est déplacé de façon conventionnelle en étant tiré par le premier côté du premier chariot mais aussi s'il est déplacé dans le sens inverse en étant poussé par le premier côté du premier chariot.

On notera que l'ensemble de chariots conventionnel susmentionné est difficile à manoeuvrer lorsqu'il est poussé, étant donné que les roues des deuxièmes couples de roues (qui sont alors les roues avant) empêchent les déplacements latéraux des chariots, et plus généralement de l'ensemble puisque les chariots sont alors les uns contre les autres (l'attelage est en position rétractée).

Au contraire, dans l'ensemble selon l'invention, on a une excellente manoeuvrabilité lorsque l'ensemble est poussé par le premier côté du premier chariot, étant donné que toutes les roues du chariot à relation au sol modifiable sont librement orientables ou pour certaines, ce qui revient au même, sont soulevées pour être hors de contact du sol.

L'ensemble de chariots selon l'invention est par exemple particulièrement commode pour préparer des commandes en prélevant des articles sur des rayonnages d'un entrepôt et en les déposant dans des caisses disposées sur les chariots.

Grâce à l'invention, il est aisé, y compris quand les allées entre les rayonnages sont étroites, de se déplacer le long des rayonnages non pas en tirant classiquement l'ensemble de chariots, mais au contraire en le poussant.

L'opérateur peut ainsi récupérer sur les rayonnages les articles commandés et les disposer dans une caisse en se déplaçant avec les caisses qui se trouvent sur les chariots devant lui (et non derrière), ce qui lui permet de remplir plus facilement les caisses.

Et lorsque que l'opérateur doit se déplacer en dehors des rayonnages, il peut tirer classiquement l'ensemble de chariots pour retrouver la configuration de remorquage qui permet de parcourir rapidement de grandes distances.

Selon des caractéristiques avantageuses de mise en oeuvre de l'ensemble de chariots selon l'invention :
- ledit premier chariot et ledit deuxième chariot sont configurés pour que le deuxième coté du premier chariot monte sur le premier coté du deuxième chariot lorsque l'attelage passe de la position déployée à la position rétractée, avec les roues du deuxième couple de roues de ce chariot qui sont ainsi soulevées et hors de contact du sol lorsque l'attelage est en position rétractée, grâce à quoi le premier chariot est un dit chariot à relation au sol modifiable ;
- ledit premier chariot comporte sur son deuxième côté au moins un guide configuré pour glisser et monter sur un châssis du deuxième chariot ;
- ledit deuxième chariot comporte pour chaque roue du deuxième couple de roues un organe de verrouillage d'un organe de maintien du moyeu, lequel organe de maintien est monté à rotation autour d'une direction verticale, lequel organe de verrouillage est configuré pour :
   - dans une configuration active, verrouiller ledit organe de maintien de moyeu de sorte que chaque roue du deuxième couple de roues est orientée suivant ladite direction de déplacement, et
   - dans une configuration inactive, laisser ledit organe de maintien de moyeu libre de tourner autour de ladite direction verticale de sorte que chaque roue du deuxième couple de roues est librement orientable,
      grâce à quoi le deuxième chariot est un chariot à relation au sol modifiable ;
   - ledit organe de maintien de moyeu comporte une couronne crantée et ledit organe de verrouillage comporte une barre engagée dans un cran de la couronne en configuration active et désengagée du cran en configuration inactive ;
   - ladite barre est mobile à basculement, autour d'une liaison pivot, entre la configuration active et la configuration inactive ;
   - ledit ensemble comporte un système d'assujettissement entre le deuxième côté du premier chariot et le premier côté du deuxième chariot ;
   - le système d'assujettissement comporte un aimant ; et/ou
   - le système d'assujettissement comporte un aimant et une patte positionnés respectivement sur l'un et l'autre du premier chariot et du deuxième chariot.

Les caractéristiques exposées ci-dessus se réfèrent au premier chariot et au deuxième chariot, mais il est bien entendu que l'ensemble selon l'invention n'est pas limité à deux chariots. Au contraire, l'ensemble selon l'invention est susceptible de comporter, en outre du premier chariot et du deuxième chariot, au moins un chariot supplémentaire s'étendant suivant une direction de déplacement prédéterminée entre un premier côté et un deuxième côté,
avec chaque couple de deux chariots voisins, autres que le premier chariot et le deuxième chariot, qui sont reliés par un attelage de la même façon que le premier chariot et le deuxième chariot,
chaque chariot supplémentaire comportant du premier côté un premier couple de roues et comportant du deuxième côté un deuxième couple de roues,
le premier chariot, le deuxième chariot et chaque chariot supplémentaire étant configurés pour coopérer de sorte qu'au moins un d'entre eux, appelé chariot à relation au sol modifiable, a une relation au sol différente suivant que l'attelage qui le relie à un chariot voisin est en position déployée ou en position rétractée :
- lorsque cet attelage est en position déployée, le chariot à relation au sol modifiable et le chariot voisin ont chacun une relation au sol nominale dans laquelle les roues du premier couple de roues sont au contact du sol et librement orientables et les roues du deuxième couple de roues sont au contact du sol et maintenues orientées suivant ladite direction de déplacement, et
- lorsque cet attelage est en position rétractée, le chariot à relation au sol modifiable et le chariot voisin ont chacun ladite relation au sol nominale sauf que le chariot à relation au sol modifiable a les roues du deuxième couple de roues qui sont soulevées pour être hors de contact du sol ou qui sont librement orientables.

Selon des caractéristiques avantageuses de l'ensemble selon l'invention lorsqu'il comporte ainsi au moins trois chariots (le premier chariot, le deuxième chariot et au moins un chariot supplémentaire) :
- l'ensemble est configuré pour que le premier chariot, le deuxième chariot et chaque dit chariot supplémentaire soient tous un dit chariot à relation au sol modifiable, à l'exception d'un seul qui conserve une relation au sol nominale ; ou
- l'ensemble est configuré pour que le premier chariot, le deuxième chariot et chaque dit chariot supplémentaire soient tous un dit chariot à relation au sol modifiable.

L'exposé de l'invention sera maintenant poursuivi par la description détaillée d'exemples de réalisation, donnée ci-après à titre illustratif et non limitatif, en référence aux dessins annexés. Sur ceux-ci :
- les figures 1 et 2 sont respectivement une vue en plan et une vue en élévation d'un premier mode de réalisation d'un ensemble selon l'invention, comportant deux chariots, avec l'attelage reliant les deux chariots qui est en position déployée ;
- les figures 3 et 4 sont des vues semblables aux figures 1 et 2, mais avec l'attelage en position rétractée ;
- la figure 5 est une vue schématique en plan d'un entrepôt dans lequel deux opérateurs préparent des commandes, l'un en tirant un ensemble de deux chariots tel que celui illustré sur les figures 1 à 4, l'autre en poussant un tel ensemble ;
- la figure 6 est une vue semblable à la figure 5, mais avec les ensembles de chariots qui comportent un chariot supplémentaire ;
- les figures 7 et 8 sont des vues semblables aux figures 2 et 4 pour un deuxième mode de réalisation de l'ensemble de chariots ;
- la figure 9 montre la coopération, en position rétractée de l'attelage reliant les chariots de ce deuxième mode de réalisation, entre une came du premier chariot et une barre du deuxième chariot ;
- les figures 10 et 11 sont des vues partielles en perspective prises comme montré respectivement par X sur la figure 7 et par XI sur la figure 8 ; et
- la figure 12 est une vue semblable aux figures 4 et 8 pour un troisième mode de réalisation de l'ensemble selon l'invention.

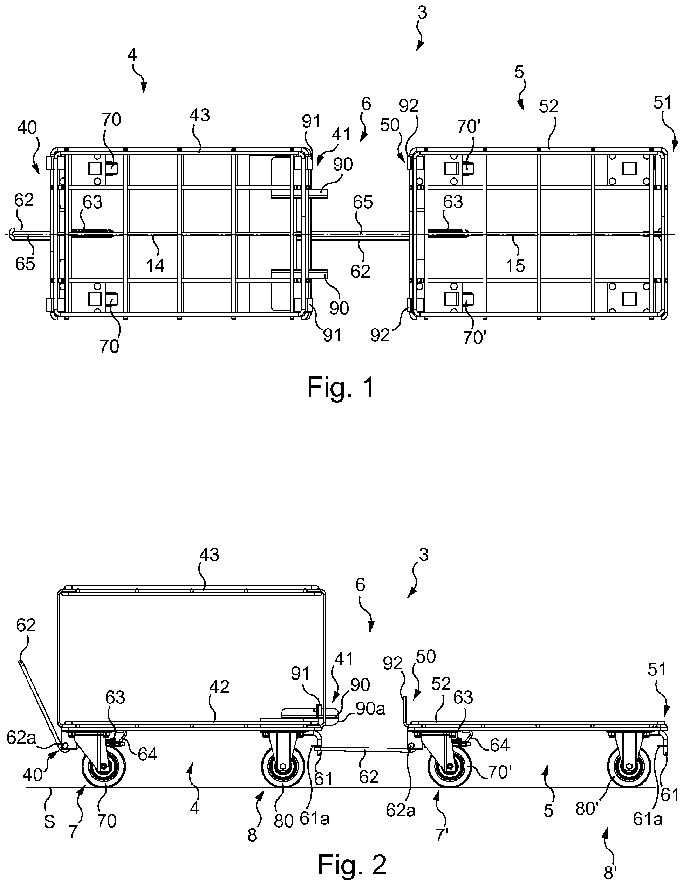

L'ensemble de chariots 3 illustré sur les figures 1 à 4 est formé par un premier chariot 4 et par un deuxième chariot 5 qui sont reliés par un attelage 6.

Le premier chariot 4 s'étend suivant une direction de déplacement 14. Le deuxième chariot 5 s'étend suivant une direction de déplacement 15.

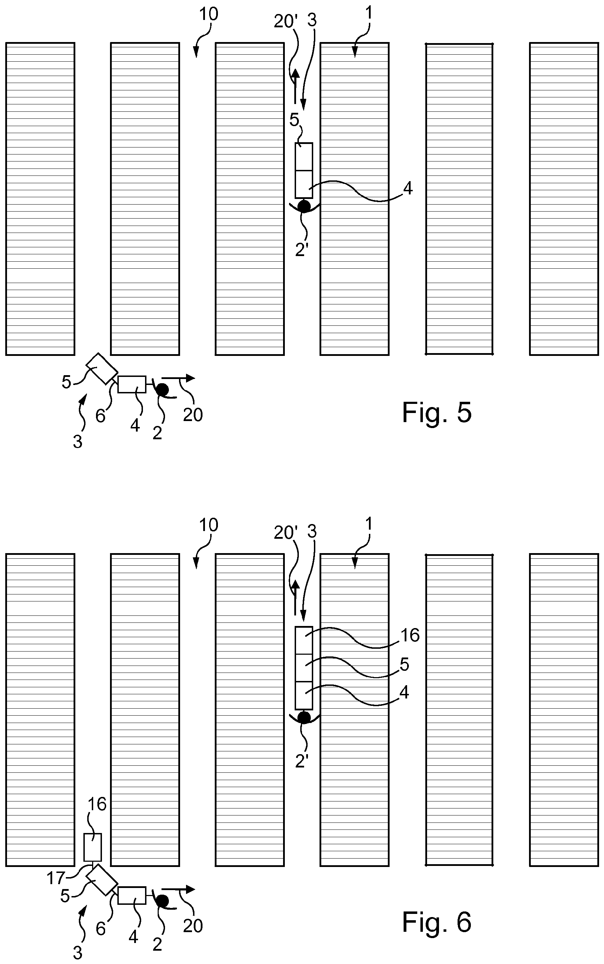

Sur les figures 1 à 4, les directions 14 et 15 sont alignées mais il est bien entendu que l'attelage 6 permet aux chariots 4 et 5 d'avoir des directions de déplacement orientées différemment, par exemple quand l'ensemble 3 est remorqué et effectue un tournant comme on le voit en bas de la figure 5.

Le premier chariot 4 s'étend suivant la direction de déplacement 14 entre un premier côté 40, situé à gauche sur les figures 1 à 4, et un deuxième côté 41, situé à droite sur les figures 1 à 4.

Le deuxième chariot 5 s'étend suivant la direction de déplacement 15 entre un premier côté 50, situé à gauche sur les figures 1 à 4, et un deuxième côté 51, situé à droite sur les figures 1 à 4.

Pour former l'attelage 6, le premier chariot 4 comporte un crochet 61 positionné du deuxième côté 41 et le deuxième chariot 5 comporte un timon 62 positionné du premier côté 50.

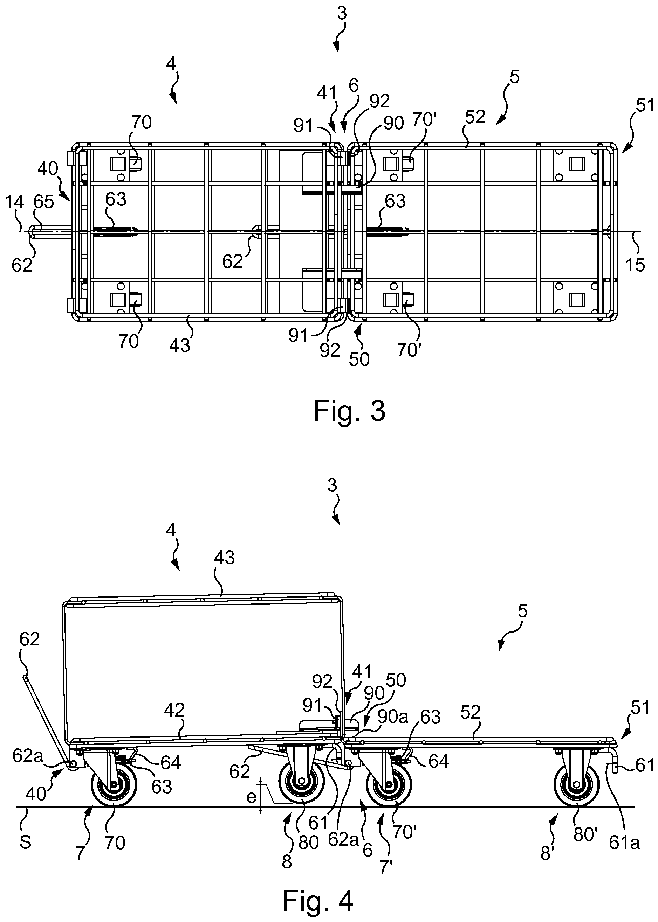

Comme on le voit sur la figure 1, le timon 62 présente une fente longitudinale 65. Comme on le voit sur les figures 2 et 4, la fente 65 est configurée pour recevoir le crochet 61 et pour lui permettre d'y coulisser.

Ainsi, l'attelage 6 :
- admet la position déployée montrée sur les figures 1 et 2, où le deuxième côté 41 du premier chariot 4 et le premier côté 50 du deuxième chariot 5 sont éloignés l'un de l'autre ;
- admet la position rétractée montrée sur les figures 3 et 4 où le deuxième côté 41 du premier chariot 4 et le premier côté 50 du deuxième chariot 5 sont rapprochés l'un de l'autre ; et
- permet le passage de l'une à l'autre de la position déployée et de la position rétractée par simple coulissement du crochet 61 le long de la fente 65 du timon 62.

La position rétractée (figures 3 et 4) de l'attelage 6 permet de stocker ou de transporter l'ensemble 3, par exemple dans un camion ou dans un monte-charge, sans perte de place puisque les chariots 4 et 5 sont alors l'un contre l'autre.

L'attelage 6 est en position déployée (figures 1 et 2) lorsque l'ensemble 3 est remorqué, par exemple comme montré en bas sur la figure 5, à savoir quand l'ensemble 3 est déplacé en tirant sur le premier chariot 4 du premier côté 40. Le premier chariot 4 et le deuxième chariot 5 sont alors déplacés dans le sens du remorquage allant du deuxième côté 41 ou 51 vers le premier côté 40 ou 50.

Ici, l'ensemble 3 est configuré pour être également utilisé en étant poussé, par exemple comme montré au centre de la figure 5, à savoir que l'ensemble 3 est déplacé en poussant sur le premier chariot 4 du premier côté 40.

L'attelage 6 est alors dans la position rétractée. Le premier chariot 4 et le deuxième chariot 5 sont alors déplacés dans le sens du poussage allant du premier côté 40 ou 50 vers le deuxième côté 41 ou 51.

On va maintenant décrire plus en détails les chariots 4 et 5.

Le premier chariot 4 comporte un châssis 42 et une rehausse 43.

Le châssis 42 est globalement en forme de plateau. Ici, le châssis 42 est fait en treillis de tiges métalliques soudées à leurs intersections.

La rehausse 43 comporte des montants et une partie globalement en forme de plateau. Les montants relient la partie globalement en forme de plateau au châssis 42 de sorte que la partie globalement en forme de plateau est disposée à distance et sensiblement parallèlement au châssis 42. Ici, la rehausse 43 est faite en treillis de tiges métalliques soudées à leurs intersections.

Le deuxième chariot 5 comporte un châssis 52 semblable au châssis 42 du premier chariot 4.

Le timon 62 est relié au châssis 52 par une liaison pivot 62a. Il présente en outre une extrémité inférieure, située sous le châssis 52, qui est recourbée. Un élément de rappel élastique 63, ici un ressort travaillant en traction, est accroché d'une part à un point d'ancrage 64 fixé sous le châssis 52 et d'autre part à l'extrémité inférieure recourbée du timon 62. L'élément de rappel élastique 63 permet ainsi de solliciter le timon 62 vers une position redressée.

Le crochet 61 est principalement formé d'une barre recourbée pointant de préférence vers le sol S sur lequel il est prévu que roule l'ensemble 3. Ainsi, le crochet 61 coopère naturellement avec la fente 65 d'un timon 62 d'un autre chariot.

Ici, le crochet 61 comporte en outre une rondelle 61a formant par exemple une butée pour le timon 62.

Pour permettre au premier chariot 4 et au deuxième chariot 5 de s'atteler à d'autres chariots, le premier chariot 4 comporte un timon 62 positionné du premier côté 40 et le deuxième chariot 5 comporte un crochet 61 positionné du deuxième côté 51. Le timon 62 du premier chariot 4 est identique au timon 62 du deuxième chariot 5. Le crochet 61 du deuxième chariot 5 est identique au crochet 61 de premier chariot 4.

Le premier chariot 4 comporte, du premier côté 40, un premier couple 7 de roues 70 et, du deuxième côté 41, un deuxième couple 8 de roues 80. Chaque couple 7 et 8 comporte une roue à proximité d'un côté latéral du chariot 4 et une roue à proximité de l'autre côté latéral du chariot 4.

Les roues 70 sont librement orientables. Les roues 80 sont à orientation fixe, c'est-à-dire qu'elles sont maintenues orientées suivant la direction de déplacement 14.

Il est ici rappelé que dans le présent mémoire, l'orientation d'une roue doit être comprise comme l'orientation de son plan général.

Le deuxième chariot 5 comporte, du premier côté 50, un premier couple 7' de roues 70' et, du deuxième côté 51, un deuxième couple 8' de roues 80'. Chaque couple 7' et 8' comporte une roue à proximité d'un côté latéral du chariot 5 et une roue à proximité de l'autre côté latéral du chariot 5.

Les roues 70' sont librement orientables. Les roues 80' sont à orientation fixe, c'est-à-dire qu'elles sont maintenues orientées suivant la direction de déplacement 15.

Conformément à l'invention, le premier chariot 4 est un chariot à relation au sol modifiable.

En effet, comme on va l'expliquer maintenant, les roues 80 du deuxième couple de roues 8 sont soulevées lorsque l'attelage 6 est en position rétractée.

Ainsi, le premier chariot 4 a une relation au sol S différente suivant que l'attelage 6 est en position déployée ou en position rétractée :
- lorsque l'attelage 6 est en position déployée (figures 1 et 2), le premier chariot 4 a une relation au sol nominale dans laquelle les roues 70 sont au contact du sol et librement orientables et les roues 80 sont au contact du sol et maintenues orientées suivant la direction de déplacement 14, et
- lorsque l'attelage 6 est en position rétractée (figures 3 et 4), le premier chariot 4 a cette relation au sol nominale sauf que les roues 80 sont soulevées pour être hors de contact du sol S.

Le deuxième chariot 5 garde la relation au sol nominale (roues 70' au contact du sol et librement orientables, roues 80' au contact du sol et maintenues orientées suivant la direction de déplacement 15) aussi bien dans la position déployée que dans la position rétractée de l'attelage 6.

Pour être à relation au sol modifiable, le premier chariot 4 comporte deux guides 90 chacun fixé du deuxième côté 41 du premier chariot 4 sur le châssis 42.

Dans ce qui suit, les références à un guide 90 valent pour chacun des deux guides 90.

Le guide 90 présente ici une forme globalement oblongue et comporte une partie en saillie pour coopérer avec le deuxième chariot 5.

Lorsque le premier chariot 4 est poussé vers le deuxième chariot 5, le guide 90 du premier chariot 4 glisse et monte sur le châssis 52 du deuxième chariot 5. Par ce mouvement, les roues 80 du premier chariot 4 se lèvent et il se crée un espace e (figure 4) entre les roues 80 et le sol S.

Pour faciliter le mouvement, le guide 90 présente par exemple un bord d'attaque 90a de forme arrondie ou biseautée.

Le guide 90 est fixé sur le châssis 42 au-dessus d'une roue 80 du premier chariot 4.

Une fois le guide 90 monté sur le châssis 52 du deuxième chariot 5, le guide 90 est alors en appui sur le châssis 52 à proximité d'une roue 70' du deuxième chariot 5.

Lorsque l'attelage 6 est en position rétractée, les roues 80 du premier chariot 4 sont alors surélevées de sorte à ne plus être au contact du sol S.

L'ensemble 3 formé du premier chariot 4 et du deuxième chariot 5 l'un contre l'autre (attelage 6 en position rétractée) a ainsi un seul couple de roues 8' dont les roues 80' sont à orientation fixe et au contact du sol S. Cela facilite la manoeuvre de l'ensemble 3 lorsqu'il est poussé.

On va maintenant décrire un exemple d'utilisation de l'ensemble 3.

La figure 5 représente de façon schématique un entrepôt comportant des rayonnages 1 qui définissent entre eux des allées 10 dans lesquelles circulent deux opérateurs 2 et 2' pour collecter des articles disposés sur les rayonnages 1.

Un premier opérateur 2, représenté en bas sur la figure 5, emmène avec lui l'ensemble 3 en le tirant. Un deuxième opérateur 2', représenté au centre de la figure 5, emmène avec lui l'ensemble 3 en le poussant.

Ainsi, le premier opérateur 2 est situé en avant de l'ensemble 3 par rapport au sens de déplacement représenté par la flèche 20 (sens du remorquage), alors que le second opérateur 2' est situé en arrière de l'ensemble 3 par rapport au sens de déplacement représenté par la flèche 20' (sens du poussage).

Dans le sens du remorquage (opérateur 2), l'écart existant entre les chariots 4 et 5 leur permet de changer d'orientation sans se gêner l'un l'autre ; la liberté d'orientation des roues 70 et 70' (qui sont en avant) permet à chaque chariot de changer aisément d'orientation ; et le maintien de l'orientation des roues 80 et 80' (qui sont en arrière) permet à chaque chariot de rester sur sa trajectoire, sans dérive latérale.

On notera que sans la modification de la relation au sol du premier chariot 4, l'ensemble 3 serait difficile à manoeuvrer dans le sens du poussage (opérateur 2'), étant donné que les roues 80 et 80' (qui seraient alors les roues avant) empêcheraient les déplacements latéraux du premier chariot 4 et du deuxième chariot 5, et donc plus généralement de l'ensemble 3 puisque le premier chariot 4 et le deuxième chariot 5 sont alors l'un contre l'autre.

Grâce à la modification de la relation au sol du premier chariot 4, l'ensemble 3 peut également être déplacé avec des qualités de manoeuvrabilité élevées dans le sens du poussage (opérateur 2').

En effet, à l'exception des roues 80' du deuxième chariot 5, toutes les roues de l'ensemble 3 sont librement orientables (roues 70 et 70') ou pour certaines (roues 80), ce qui revient au même, sont soulevées pour être hors de contact du sol. Le changement d'orientation de l'ensemble 3 est ainsi rendu possible, avec le premier chariot 4 et le deuxième chariot 5 qui changent d'orientation ensemble puisqu'ils sont l'un contre l'autre.

Le maintien de l'orientation des roues 80' permet de faire rester l'ensemble 3 sur sa trajectoire, sans dérive latérale : l'ensemble 3 change d'orientation en pivotant autour des roues 80'.

Grâce à la modification de la relation au sol du premier chariot 4, il est aisé de se déplacer dans les allées 10, comme le fait l'opérateur 2', y compris quand les allées 10 sont étroites, pour récupérer les articles à collecter et les disposer sur l'un des chariots de l'ensemble 3, par exemple pour remplir des caisses portées par les chariots de l'ensemble 3.

De telles caisses se trouvant alors devant l'opérateur, il peut les remplir particulièrement aisément.

Lorsque la collecte des articles est terminée, le sens de déplacement est inversé pour passer au sens du remorquage où l'ensemble 3 est tiré comme le fait l'opérateur 2, l'attelage 6 passe à sa configuration déployée, la relation au sol du premier chariot 4 redevient nominale, et il est aisé de déplacer l'ensemble 3 en dehors des allées 10 pour parcourir rapidement de grandes distances.

On va maintenir décrire une autre mesure prise sur l'ensemble 3 pour faciliter sa manoeuvre dans le sens du poussage (opérateur 2').

Lorsque l'opérateur tel que 2' doit modifier la trajectoire de l'ensemble 3, il agit sur le premier chariot 4.

Le premier chariot 4 change alors d'orientation et agit à son tour sur le deuxième chariot 5 pour le faire changer d'orientation.

Mais rien ne garantit que le deuxième chariot 5 va lui aussi changer d'orientation puisque dans l'attelage 6 le crochet 61 est libre de coulisser dans la fente 65 du timon 62. Le bord gauche ou le bord droit du premier côté 50 du deuxième chariot 5 est donc libre de s'écarter du bord gauche ou du bord droit du deuxième côté 41 du premier chariot 4. Si le deuxième chariot 5 prend ainsi une orientation différente du premier chariot 4, l'ensemble 3 peut ne plus pouvoir être contrôlé en agissant sur le seul premier chariot 4.

De même, en cas de dévers ou d'obstacle localisé sur le sol S, le deuxième chariot 5 peut prendre une orientation différente de celle du premier chariot 4, ce qui peut aussi empêcher de contrôler l'ensemble 3 en agissant sur le seul premier chariot 4.

Pour éviter de telles situations, l'ensemble 3 offre un certain maintien entre le deuxième côté 41 du premier chariot 4 et le premier côté 50 du deuxième chariot 5 grâce un système d'assujettissement s'activant quand le côté 41 et le côté 50 sont rapprochés l'un de l'autre, et se désactivant quand l'effort d'écartement entre le côté 41 et le côté 50 est supérieur à un seuil prédéterminé.

Ce système d'assujettissement comporte ici deux couples comportant chacun un aimant 91 positionné sur le premier chariot 4 de son deuxième côté 41 et une patte 92 positionnée sur le deuxième chariot 5 de son premier côté 50.

Dans ce qui suit les références à un aimant 91 et à une patte 92 valent pour chaque couple formé par un aimant 91 et une patte 92.

L'aimant 91 et la patte 92 coopèrent pour maintenir assujettis le premier chariot 4 et le deuxième chariot 5 dans la position rétractée de l'attelage 6.

Le seuil de l'effort d'écartement entre le côté 41 et le côté 50 permettant de séparer l'aimant 91 et la patte 92 dépend de la puissance de l'aimant 91.

Ce seuil est sélectionné pour être plus grand que les efforts d'écartement susceptibles d'exister lors des manoeuvres de l'ensemble 3 dans le sens du poussage et plus petit que les efforts s'exerçant normalement quand l'ensemble 3 est remorqué.

De manière générale, le système d'assujettissement est avantageusement libéré par un effort au moins égal à un seuil compris entre 10 N et 25 N.

Dans la variante illustrée sur la figure 6, l'ensemble 3 comporte, en outre du premier chariot 4 et du deuxième chariot 5, un troisième chariot 16.

Le deuxième chariot 5 et le troisième chariot 16 sont reliés par un attelage 17 de la même façon que le premier chariot 4 et le deuxième chariot 5 sont reliés par l'attelage 6.

D'une façon générale, dans la variante de l'ensemble 3 illustrée sur la figure 6, le deuxième chariot 5 et le troisième chariot 16 coopèrent de la même façon que le premier chariot 4 et le deuxième chariot 5.

En particulier, le deuxième chariot 5 de l'ensemble 3 illustré sur la figure 6 comporte en outre, sur le deuxième côté 51, deux guides tels que le guide 90 et deux aimants tels que l'aimant 91.

Ainsi, en position rétractée de l'attelage 17, le guide du deuxième côté 51 du deuxième chariot 5 est alors monté en appui sur le châssis du troisième chariot 16, de sorte que les roues 80' du deuxième chariot 5 sont également surélevées de sorte à ne plus être au contact du sol S, les roues du deuxième couple de roues du troisième chariot 16 (semblables aux roues 80 et 80') étant alors les seules à être à la fois au contact du sol S et maintenues orientées suivant la direction de déplacement.

Ce deuxième couple de roues du troisième chariot 16 est celui qui est le plus éloigné de l'opérateur 2' de la figure 6.

Dans des variantes non illustrées, un ou plusieurs autres chariots supplémentaires sont ajoutés, avec chaque couple de deux chariots voisins qui coopèrent comme le premier chariot 4 et le deuxième chariot 5.

Par exemple, si l'ensemble 3 comporte un quatrième chariot, le troisième chariot 16 et le quatrième chariot sont reliés par un attelage semblable à l'attelage 6 ; et en position rétractée de cet attelage, le côté du troisième chariot tourné vers le quatrième chariot monte sur le côté du quatrième chariot tourné vers le troisième chariot, les roues restant à orientation fixe et au contact du sol se trouvant alors à l'opposé de l'opérateur, sur le quatrième chariot.

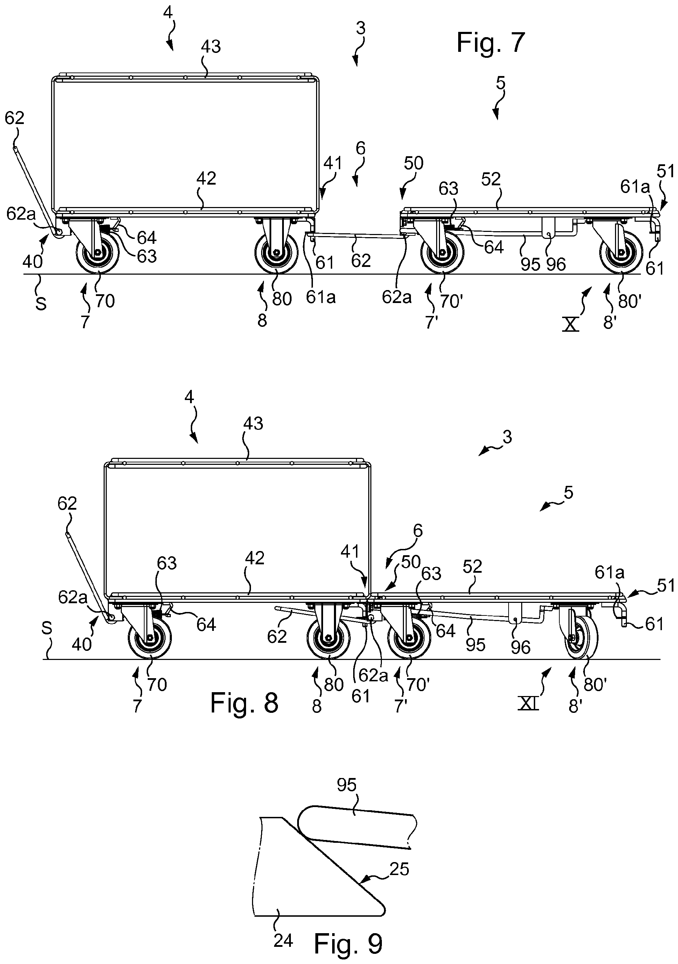

Les figures 7 à 11 illustrent un deuxième mode de réalisation de l'ensemble 3, semblable au premier mode de réalisation illustré sur les figures 1 à 4, si ce n'est que le premier chariot 4 est dépourvu de guides 90 ; et que le deuxième chariot 5 a ses roues 80', situées du deuxième côté 51, qui sont libérables en orientation.

Chaque roue 80' coopère avec un organe de maintien du moyeu, monté à rotation autour d'une direction verticale. Chaque organe de maintien de moyeu coopère avec un organe de verrouillage configuré pour :
- dans une configuration active, verrouiller l'organe de maintien du moyeu de sorte que la roue 80' soit orientée suivant la direction de déplacement 15 ; et
- dans une configuration inactive, laisser l'organe de maintien du moyeu libre de tourner autour de ladite direction verticale.

L'organe de verrouillage est dans la configuration active lorsque l'attelage 6 est dans la position déployée et dans la configuration inactive lorsque l'attelage 6 est dans la position rétractée.

Ainsi, l'organe de verrouillage agit sur l'organe de maintien du moyeu pour rendre les roues 80' libres d'orientation lorsque l'attelage 6 est dans la position rétractée.

Les roues 80' étant ainsi rendues libres d'orientation, elles n'ont plus de fonction directive même si elles restent au contact du sol S. Seules les roues 80 restent au contact du sol S et maintenues orientées suivant la direction de déplacement dans la position rétractée de l'attelage 6.

Par conséquent, dans le mode de réalisation de l'ensemble 3 illustré sur les figures 7 à 11, seul le deuxième chariot 5 est un chariot à relation au sol modifiable.

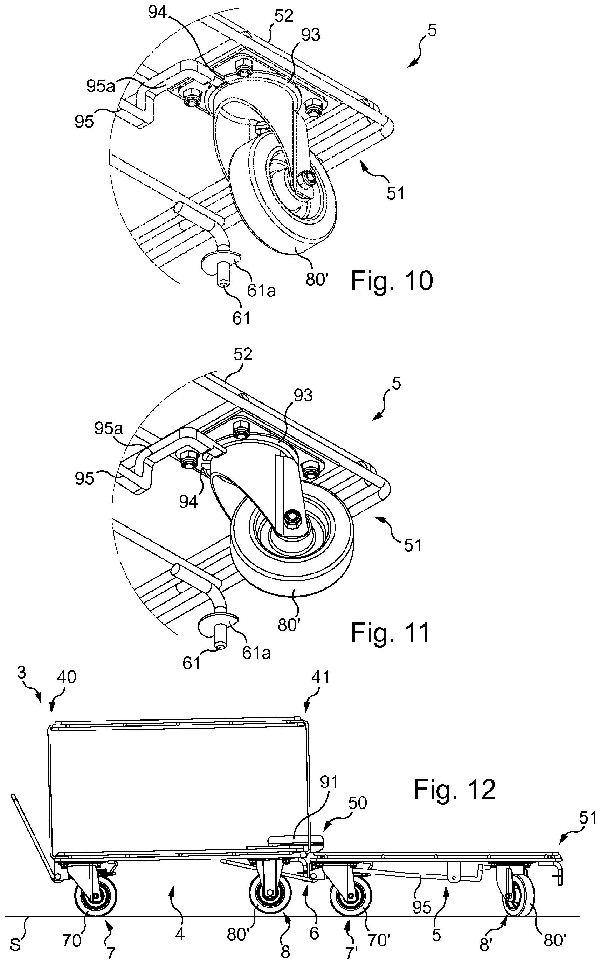

Comme on le voit sur les figures 10 et 11, l'organe de maintien du moyeu comporte ici une couronne 93 centrée sur un axe d'orientation de la roue 80' correspondante, et solidaire d'un jambage auquel est fixé le moyeu de la roue 80'.

La couronne 93 comporte sur sa périphérie un cran d'arrêt 94 pour le maintien selon une orientation prédéterminée grâce à une barre 95. Ici, la barre 95 présente une extrémité 95a pliée dont un bout coopère avec le cran d'arrêt 94.

Lorsque la barre 95 est engagée dans le cran d'arrêt 94, la roue 80' est maintenue orientée selon la direction de déplacement 15, et lorsque la barre 95 est désengagée du cran 94, la roue 80' est libre d'orientation.

La barre 95 est reliée au châssis du deuxième chariot 5 par une liaison pivot 96, qui permet à la barre 95 de basculer pour s'engager ou se désengager du cran d'arrêt 94.

Ici, comme on le voit sur les figures 7 et 8, la liaison pivot 96 est excentrée par rapport à la barre 95 pour faciliter son basculement en vue de s'engager dans le cran d'arrêt 94. Autrement dit, une portion de la barre 95 située vers le cran d'arrêt 94 par rapport à la liaison pivot 96 est plus courte qu'une portion de la barre 95 située de l'autre côté de la liaison pivot 96 de sorte que cette dernière forme un contrepoids tendant à relever naturellement l'extrémité 95a de la barre 95 pour qu'elle s'engage dans le cran d'arrêt 94. Cet effet est optionnellement renforcé par un ressort (non représenté) situé par exemple du côté de l'extrémité 95a par rapport à la liaison pivot 96 et travaillant en traction.

L'ensemble 3 comporte ici une barre 95 par roue 80' du deuxième couple 8' de roues 80' du deuxième chariot 5, qui sont par exemple en image miroir l'une par rapport à l'autre.

Quand l'opérateur tel que 2' pousse l'ensemble 3 alors que l'attelage 6 est en position déployée, l'attelage 6 se rétracte, le premier chariot 4 vient buter contre le deuxième chariot 5, ce qui fait passer automatiquement l'organe de verrouillage formé par la barre 95 dans la configuration inactive.

Le premier chariot 4 entraîne en effet la barre 95 qui pivote autour de la liaison pivot 96. L'extrémité 95a descend et sort du cran 94, ce qui rend la roue 80' libre d'orientation.

Pour entraîner ainsi la barre 95, le premier chariot 4 comporte une came 24 (figure 9) présentant une rampe 25 sur laquelle glisse le bout de la barre 95 lorsque le premier côté 50 du deuxième chariot 5 se rapproche du deuxième côté 41 du premier chariot 4.

Quand le premier chariot 4 est à nouveau tiré, l'organe de verrouillage formé par la barre 95 passe automatiquement à la configuration active : la barre 95 pivote en sens inverse et par basculement sous l'effet du contrepoids, son extrémité 95a remonte en pression sur la couronne 93 et lorsque la roue 80' se réoriente selon la direction de déplacement la barre 95 rentre dans le cran d'arrêt 94 de sorte que la roue 80' redevient fixe d'orientation.

Un système d'assujettissement (non illustré), semblable à celui décrit pour l'ensemble 3 illustré sur les figures1 à 4, est présent sur le premier chariot 4 et sur le deuxième chariot 5, par exemple avec deux couples chacun formé par un aimant 91 et une patte 90.

En variante, l'ensemble 3 illustré sur les figures 7 à 11 comporte davantage que deux chariots, les chariots supplémentaires étant par exemple identiques au deuxième chariot 5.

Dans cette variante, lorsque les attelages sont en position rétractée, le premier chariot 4 actionne chaque barre 95 du deuxième chariot 5 de sorte à rendre les roues 80' libres d'orientation, comme ceci a été décrit précédemment. Le deuxième chariot 5 actionne alors à son tour chaque barre, identique à la barre 95, d'un troisième chariot, rendant les roues d'un deuxième couple de roues du troisième chariot libres d'orientation.

De manière générale pour un ensemble 3 de n chariots, chaque chariot autre que le n-ième chariot actionne à son tour chaque barre, identique à la barre 95, d'un chariot qui le succède, rendant les roues d'un deuxième couple libres d'orientation.

L'ensemble 3 de n chariots avec les attelages en position rétractée n'a ainsi plus qu'un seul couple de roues à orientation fixe et au contact du sol S qui est celui du chariot le plus proche d'un opérateur qui manoeuvre l'ensemble 3 par le premier chariot 4, c'est-à-dire les roues 80 du premier chariot 4.

Ainsi, tous les chariots autres que le premier chariot 4 sont des chariots à relation au sol modifiable.

De manière générale, si l'on souhaite éviter les dérives latérales de l'ensemble 3, on prévoit que l'ensemble 3 avec les attelages en position rétractée conserve un seul couple de roues d'orientation fixe. Celui-ci est par exemple situé sur le premier chariot 4, ou sur un dernier chariot (un n-ième chariot), c'est-à-dire le chariot le plus éloigné par rapport à un opérateur qui déplace l'ensemble 3 en poussant le premier chariot 4, ou encore à un autre emplacement.

La figure 12 illustre un troisième mode de réalisation de l'ensemble 3, dans lequel le deuxième chariot 5 est identique celui du deuxième mode de réalisation illustré sur les figures 7 à 11 tandis que le premier chariot 4 est identique à celui du premier mode de réalisation illustré sur les figures 1 à 4, si ce n'est qu'il comporte en outre une came 24 pour entraîner les barres 95 du deuxième chariot 5.

Dans la position rétractée de l'attelage 6, montrée sur la figure 12, les roues 80 du premier chariot 4 sont soulevées pour être hors de contact du sol S tandis que les roues 80' du deuxième chariot 5 sont libres d'orientation.

Ainsi, dans le troisième mode de réalisation de l'ensemble 3, le premier chariot 4 et le deuxième chariot 5 sont tous deux un chariot à relation au sol modifiable.

Lorsque l'attelage 6 est en position rétractée (figure 12), l'ensemble 3 n'offre pas de résistance aux déplacements latéraux.

Cela permet par exemple de placer aisément l'ensemble 3 sur un emplacement de stationnement en créneau.

En variante, l'ensemble 3 illustré sur la figure 12 comporte davantage que deux chariots, les chariots supplémentaires étant par exemple identiques au deuxième chariot 5.

Dans cette variante, lorsque les attelages sont en position rétractée, le premier chariot 4 actionne chaque barre 95 du deuxième chariot 5 de sorte à rendre les roues 80' libres d'orientation, comme ceci a été décrit précédemment. Le deuxième chariot 5 actionne alors à son tour chaque barre, identique à la barre 95, d'un troisième chariot, rendant les roues d'un deuxième couple de roues du troisième chariot libres d'orientation.

De manière générale pour un ensemble 3 de n chariots, chaque chariot autre que le n-ième chariot actionne à son tour chaque barre, identique à la barre 95, d'un chariot qui le succède, rendant les roues d'un deuxième couple libres d'orientation.

L'ensemble 3 de n chariots avec les attelages en position rétractée n'a ainsi aucun couple de roues à orientation fixe et au contact du sol S.

Ainsi, tous les chariots de l'ensemble 3 sont des chariots à relation au sol modifiable.

D'une façon générale, selon les circonstances :
- si l'on souhaite éviter les dérives latérales, on choisit un ensemble 3 tel que dans le premier mode de réalisation (figures 1 à 4) ou le deuxième mode de réalisation (figures 7 à 11) où un seul chariot conserve une relation au sol nominale et tous les autres sont des chariots à relation au sol modifiable ; et
- si l'on souhaite éviter toute résistance aux déplacements latéraux, on choisit un ensemble 3 tel que dans le troisième mode de réalisation (figure 12), où tous les chariots sont à relation au sol modifiable.

Dans des variantes non illustrées, il y a davantage qu'un seul chariot qui conserve une relation au sol nominale, par exemple deux chariots pour un ensemble de trois chariots.

On observera que dans chacun des chariots décrits ci-dessus, il n'y a pas d'autres roues que les roues du premier couple et du deuxième couple. Dans des variantes non illustrées, il y a davantage de roues, par exemple les roues simples décrites sont remplacées par des roues jumelées et/ou une roue supplémentaire à orientation libre est prévue.

Dans des variantes non illustrées du premier mode de réalisation (figures 1 à 4), le nombre de guides 90 sur le deuxième côté du chariot est différent de deux, par exemple un ou trois ; et/ou des organes autres que les guides 90 sont mis en oeuvre, par exemple un couple de cames dont chacune est située sur l'un des chariots.

Dans des variantes non illustrées du deuxième mode de réalisation (figures 7 à 11), les deux barres 95 chacune pour une roue 80' sont remplacées par une fourche dont le côté à deux bouts coopère avec les couronnes 93 et le côté à un bout coopère avec une seule came telle que la came 24.

Dans des modes de réalisation non illustrés, la modification de la relation au sol des chariots concernés ne s'effectue pas de façon mécanique, mais de façon électrique grâce à un interrupteur qui est dans une position différente suivant que l'attelage est en position déployée ou en position rétractée ainsi que grâce à un organe électrique de verrouillage de l'orientation des roues concernées, cet organe étant relié à l'interrupteur pour être actif quand l'attelage est en position déployée et pour être inactif quand l'attelage est en position rétractée ; par exemple, l'organe électrique de verrouillage comporte un actuateur électrique et un doigt semblable au bout de la barre 95, positionné comme sur la figure 10 quand l'attelage est en position déployée et positionné comme sur la figure 11 quand l'attelage est en position rétractée.

Dans des variantes non illustrées de chacun des différents modes de réalisation décrits ci-dessus :
- la rehausse 43 est prévue sur un ou plusieurs chariot(s) autre(s) que le premier chariot 4 ; ou aucun chariot ne comporte de rehausse telle que 43 ;
- un ou plusieurs chariots ont un châssis conformé différemment et/ou fait autrement que par un treillis de tiges soudées, par exemple en tôles pliées et soudées ; et/ou
- l'aimant 91 est placé sur le deuxième chariot 5 et la patte 92 sur le premier chariot 4 ; un couple d'assujettissement temporaire à seuil de libération autre qu'un aimant et une patte métallique est mis en oeuvre, par exemple du type Velcro® ; et/ou le nombre de couples du système d'assujettissement est différent de deux, par exemple un seul ou trois.

De nombreuses autres variantes sont possibles en fonction des circonstances, et l'on rappelle à cet égard que l'invention ne se limite pas aux exemples décrits et représentés.

## Revendications

1. Ensemble de chariots configuré pour être remorqué, comportant un premier chariot (4) et un deuxième chariot (5) s'étendant chacun suivant une direction de déplacement prédéterminée (14, 15) entre un premier côté (40, 50) et un deuxième côté (41, 51),
le premier chariot (4) et le deuxième chariot (5) étant reliés par un attelage (6) se trouvant du deuxième côté (41) du premier chariot (4) et du premier côté (50) du deuxième chariot (5), lequel attelage (6) comporte un crochet (61) et un timon (62) mobiles à coulissement l'un par rapport à l'autre pour que l'attelage admette une position déployée dans laquelle le deuxième côté (41) du premier chariot (4) et le premier côté (50) du deuxième chariot (5) sont éloignés l'un de l'autre et pour que l'attelage (6) admette une position rétractée dans laquelle le deuxième côté (41) du premier chariot (4) et le premier côté (50) du deuxième chariot (5) sont rapprochés l'un de l'autre,
le premier chariot (4) et le deuxième chariot (5) comportant chacun du premier côté (40, 50) un premier couple (7, 7') de roues (70, 70') et comportant chacun du deuxième côté (41, 51) un deuxième couple (8, 8') de roues (80, 80'),
**caractérisé en ce que** le premier chariot (4) et le deuxième chariot (5) sont configurés pour coopérer de sorte qu'au moins l'un d'eux, appelé chariot à relation au sol modifiable, a une relation au sol (S) différente suivant que l'attelage (6) est en position déployée ou en position rétractée :
- lorsque l'attelage (6) est en position déployée, le premier chariot (4) et le deuxième chariot (5) ont chacun une relation au sol nominale dans laquelle les roues (70, 70') du premier couple (7, 7') de roues sont au contact du sol (S) et librement orientables et les roues (80, 80') du deuxième couple (8, 8') de roues sont au contact du sol et maintenues orientées suivant ladite direction de déplacement (14, 15), et
- lorsque l'attelage (6) est en position rétractée, le premier chariot (4) et le deuxième chariot (5) ont chacun ladite relation au sol nominale sauf que le chariot à relation au sol modifiable a les roues (80, 80') du deuxième couple (8, 8') de roues qui sont soulevées pour être hors de contact du sol (S) ou qui sont librement orientables.

2. Ensemble selon la revendication 1, **caractérisé en ce que** ledit premier chariot (4) et ledit deuxième chariot (5) sont configurés pour que le deuxième coté (41) du premier chariot (4) monte sur le premier coté (50) du deuxième chariot (5) lorsque l'attelage passe de la position déployée à la position rétractée, avec les roues (80) du deuxième couple (8) de roues de ce chariot qui sont ainsi soulevées et hors de contact du sol (S) lorsque l'attelage (6) est en position rétractée, grâce à quoi le premier chariot (4) est un dit chariot à relation au sol modifiable.

3. Ensemble selon la revendication 2, **caractérisé en ce que** ledit premier chariot (4) comporte sur son deuxième côté (41) au moins un guide (90) configuré pour glisser et monter sur un châssis (52) du deuxième chariot (5).

4. Ensemble selon l'une quelconque des revendications 1 à 3, **caractérisé en ce que** ledit deuxième chariot (5) comporte pour chaque roue (80') du deuxième couple (8') de roues un organe de verrouillage d'un organe de maintien du moyeu, lequel organe de maintien est monté à rotation autour d'une direction verticale, lequel organe de verrouillage est configuré pour :
- dans une configuration active, verrouiller ledit organe de maintien de moyeu de sorte que chaque roue (80') du deuxième couple (8') de roues est orientée suivant ladite direction de déplacement (15), et
- dans une configuration inactive, laisser ledit organe de maintien de moyeu libre de tourner autour de ladite direction verticale de sorte que chaque roue (80') du deuxième couple (8') de roues est librement orientable,
grâce à quoi le deuxième chariot (5) est un chariot à relation au sol modifiable.

5. Ensemble selon la revendication 4, **caractérisé en ce que** ledit organe de maintien de moyeu comporte une couronne (93) crantée et ledit organe de verrouillage comporte une barre (95) engagée dans un cran (94) de la couronne (93) en configuration active et désengagée du cran (94) en configuration inactive.

6. Ensemble selon la revendication 5, **caractérisé en ce que** la dite barre (95) est mobile à basculement, autour d'une liaison pivot (96), entre la configuration active et la configuration inactive.

7. Ensemble selon l'une quelconque des revendications 1 à 6, **caractérisé en ce qu'**il comporte un système d'assujettissement entre le deuxième côté (50) du premier chariot (5) et le premier côté (41) du deuxième chariot (5).

8. Ensemble selon la revendication 7, **caractérisé en ce que** le système d'assujettissement comporte un aimant (91).

9. Ensemble selon l'une quelconque des revendications 7 ou 8, **caractérisé en ce que** le système d'assujettissement comporte un aimant (91) et une patte (92) positionnés respectivement sur l'un et l'autre du premier chariot (4) et du deuxième chariot (5).

10. Ensemble selon l'une quelconque des revendications 1 à 9, **caractérisé en ce qu'**il comporte, en outre du premier chariot (4) et du deuxième chariot (5), au moins un chariot supplémentaire (16) s'étendant suivant une direction de déplacement prédéterminée entre un premier côté et un deuxième côté,
avec chaque couple de deux chariots voisins (5, 16), autres que le premier chariot (4) et le deuxième chariot (5), qui sont reliés par un attelage (17) de la même façon que le premier chariot (4) et le deuxième chariot (5),
chaque chariot supplémentaire (16) comportant du premier côté un premier couple de roues et comportant du deuxième côté un deuxième couple de roues,
le premier chariot (4), le deuxième chariot (5) et chaque chariot supplémentaire (16) étant configurés pour coopérer de sorte qu'au moins un d'entre eux, appelé chariot à relation au sol modifiable, a une relation au sol (S) différente suivant que l'attelage (6, 17) qui le relie à un chariot voisin est en position déployée ou en position rétractée :
- lorsque cet attelage (6, 17) est en position déployée, le chariot à relation au sol modifiable et le chariot voisin ont chacun une relation au sol nominale dans laquelle les roues du premier couple de roues sont au contact du sol (S) et librement orientables et les roues du deuxième couple de roues sont au contact du sol et maintenues orientées suivant ladite direction de déplacement, et
- lorsque cet attelage (6, 17) est en position rétractée, le chariot à relation au sol modifiable et le chariot voisin ont chacun ladite relation au sol nominale sauf que le chariot à relation au sol modifiable a les roues du deuxième couple de roues qui sont soulevées pour être hors de contact du sol (S) ou qui sont librement orientables.

11. Ensemble selon la revendication 10, **caractérisé en ce qu'**il est configuré pour que le premier chariot (4), le deuxième chariot (5) et chaque dit chariot supplémentaire (16) soient tous un dit chariot à relation au sol modifiable, à l'exception d'un seul qui conserve une relation au sol nominale.

12. Ensemble selon la revendication 10, **caractérisé en ce qu'**il est configuré pour que le premier chariot (4), le deuxième chariot (5) et chaque dit chariot supplémentaire (16) soient tous un dit chariot à relation au sol modifiable.

## Patentansprüche

1. Anordnung von Wagen, die dazu ausgelegt ist, geschleppt zu werden, umfassend einen ersten Wagen (4) und einen zweiten Wagen (5), die sich jeweils in einer vorbestimmten Verlagerungsrichtung (14, 15) zwischen einer ersten Seite (40, 50) und einer zweiten Seite (41, 51) erstrecken,
wobei der erste Wagen (4) und der zweite Wagen (5) über eine Kupplung (6) verbunden sind, die sich auf der zweiten Seite (41) des ersten Wagens (4) und auf der ersten Seite (50) des zweiten Wagens (5) befindet, wobei die Kupplung (6) einen Haken (61) und eine Deichsel (62) enthält, die gleitbeweglich zueinander verschiebbar sind, damit die Kupplung eine ausgefahrene Position einnimmt, in welcher die zweite Seite (41) des ersten Wagens (4) und die erste Seite (50) des zweiten Wagens (5) voneinander entfernt sind, und damit die Kupplung (6) eine eingefahrene Position einnimmt, in welcher die zweite Seite (41) des ersten Wagens (4) und die erste Seite (50) des zweiten Wagens (5) einander angenähert sind,
wobei der erste Wagen (4) und der zweite Wagen (5) jeweils auf der ersten Seite (40, 50) ein erstes Paar (7, 7') von Rädern (70, 70') enthalten und jeweils auf der zweiten Seite (41, 51) ein zweites Paar (8, 8') von Rädern (80, 80') enthalten,
**dadurch gekennzeichnet, dass**
der erste Wagen (4) und der zweite Wagen (5) dazu ausgelegt sind, so zusammenzuwirken, dass zumindest einer davon, der sogenannte Wagen mit veränderlicher Bodenfreiheit, eine unterschiedliche Bodenfreiheit (S) hat, je nachdem, ob die Kupplung (6) in ausgefahrener Position oder in eingefahrener Position ist, wobei dann,
- wenn die Kupplung (6) in ausgefahrener Position ist, der erste Wagen (4) und der zweite Wagen (5) jeweils eine nominale Bodenfreiheit haben, bei welcher die Räder (70, 70') des ersten Paares (7, 7') von Rädern den Boden (S) kontaktieren und lenkbar sind und die Räder (80, 80') des zweiten Paares (8, 8') von Rädern den Boden kontaktieren und in Verlagerungsrichtung (14, 15) gelenkt gehalten werden, und
- wenn die Kupplung (6) in eingefahrener Position ist, der erste Wagen (4) und der zweite Wagen (5) jeweils eine nominale Bodenfreiheit haben, abgesehen davon, dass der Wagen mit veränderlicher Bodenfreiheit bei dem zweiten Paar von Rädern (8, 8') angehobene Räder (80, 80') hat, um nicht den Boden (S) zu kontaktieren, oder frei lenkbare Räder hat.

2. Anordnung nach Anspruch 1, **dadurch gekennzeichnet, dass** der erste Wagen (4) und der zweite Wagen (5) dazu ausgelegt sind, dass die zweite Seite (41) des ersten Wagens (4) auf die erste Seite (50) des zweiten Wagens (5) aufläuft, wenn die Kupplung von der ausgefahrenen Position in die eingefahrene Position übergeht, wobei die Räder (80) des zweiten Paares (8) von Rädern dieses Wagens somit angehoben sind und nicht den Boden (S) kontaktieren, wenn die Kupplung (6) in eingefahrener Position ist, wodurch der erste Wagen (4) ein sogenannter Wagen mit veränderlicher Bodenfreiheit ist.

3. Anordnung nach Anspruch 2, **dadurch gekennzeichnet, dass** der erste Wagen (4) auf seiner zweiten Seite (41) zumindest eine Führung (90) enthält, die dazu ausgelegt ist, auf ein Chassis (52) des zweiten Wagens (5) zu gleiten und aufzulaufen.

4. Anordnung nach einem der Ansprüche 1 bis 3, **dadurch gekennzeichnet, dass** der zweite Wagen (5) für jedes Rad (80') des zweiten Paares (8') von Rädern ein Verriegelungsorgan zum Verriegeln eines Nabenhalteorgans enthält, wobei das Halteorgan um eine vertikale Richtung drehbar gelagert ist, wobei das Verriegelungsorgan dazu ausgelegt ist, um:
- in einer aktiven Stellung das Nabenhalteorgan so zu verriegeln, das jedes Rad (80') des zweiten Paares (8') von Rädern in Verlagerungsrichtung (15) gelenkt ist, und
- in einer inaktiven Stellung das Nabenhalteorgan um die vertikale Richtung frei drehbar zu lassen, so dass jedes Rad (80') des zweiten Paares (8') von Rädern frei lenkbar ist,
wodurch der zweite Wagen (5) ein Wagen mit veränderlicher Bodenfreiheit ist.

5. Anordnung nach Anspruch 4, **dadurch gekennzeichnet, dass** das Nabenhalteorgan einen Zahnkranz (93) enthält und das Verriegelungsorgan eine Stange (95) enthält, die in aktiver Stellung in eine Kerbe (94) des Kranzes (93) eingreift und in inaktiver Stellung außer Eingriff mit der Kerbe (94) ist.

6. Anordnung nach Anspruch 5, **dadurch gekennzeichnet, dass** die Stange (95) zwischen der aktiven Stellung und der inaktiven Stellung um eine Gelenkverbindung (96) verschwenkbar ist.

7. Anordnung nach einem der Ansprüche 1 bis 6, **dadurch gekennzeichnet, dass** sie zwischen der zweiten Seite (50) des ersten Wagens (5) und der ersten Seite (41) des zweiten Wagens (5) einen Niederhalter enthält.

8. Anordnung nach Anspruch 7, **dadurch gekennzeichnet, dass** der Niederhalter einen Magneten (91) enthält.

9. Anordnung nach einem der Ansprüche 7 oder 8, **dadurch gekennzeichnet, dass** der Niederhalter einen Magneten (91) und eine Lasche (92) enthält, die an dem einen bzw. anderen aus erstem Wagen (4) und zweitem Wagen (5) angeordnet sind.

10. Anordnung nach einem der Ansprüche 1 bis 9, **dadurch gekennzeichnet, dass** sie neben dem ersten Wagen (4) und dem zweiten Wagen (5) zumindest einen zusätzlichen Wagen (16) enthält, der sich in einer vorbestimmten Verlagerungsrichtung zwischen einer ersten Seite und einer zweiten Seite erstreckt,
wobei jedes Paar aus zwei benachbarten Wagen (5, 16), außer aus dem ersten Wagen (4) und dem zweiten Wagen (5), über eine Kupplung (17) in der gleichen Art und Weise wie der erste Wagen (4) und der zweite Wagen (5) verbunden ist,
wobei der zusätzliche Wagen (16) auf der ersten Seite ein erstes Paar von Rädern und auf der zweiten Seite ein zweites Paar von Rädern enthält, wobei der erste Wagen (4), der zweite Wagen (5) und jeder zusätzliche Wagen (16) dazu ausgelegt sind, so zusammenzuwirken, dass zumindest einer davon, der sogenannte Wagen mit veränderlicher Bodenfreiheit, eine unterschiedliche Bodenfreiheit (S) hat, je nachdem, ob die diesen mit einem benachbarten Wagen verbindende Kupplung (6, 17) in ausgefahrener oder eingefahrener Position ist, wobei dann,
- wenn diese Kupplung (6, 17) in ausgefahrener Position ist, der Wagen mit veränderlicher Bodenfreiheit und der benachbarte Wagen jeweils eine nominale Bodenfreiheit haben, bei welcher die Räder des ersten Paares von Rädern den Boden (S) kontaktieren und frei lenkbar sind und die Räder des zweiten Paares von Rädern den Boden kontaktieren und in Verlagerungsrichtung gelenkt gehalten werden, und
- wenn diese Kupplung (6, 17) in eingefahrener Position ist, der Wagen mit veränderlicher Bodenfreiheit und der benachbarte Wagen jeweils die nominale Bodenfreiheit haben, abgesehen davon, dass der Wagen mit veränderlicher Bodenfreiheit bei dem zweiten Paar von Rädern angehobene Räder hat, um nicht den Boden (S) zu kontaktieren, oder frei lenkbare Räder hat.

11. Anordnung nach Anspruch 10, **dadurch gekennzeichnet, dass** sie dazu ausgelegt ist, dass der erste Wagen (4), der zweite Wagen (5) und jeder zusätzliche Wagen (16) alle einen sogenannten Wagen mit veränderlicher Bodenfreiheit darstellen, mit Ausnahme von einem einzigen, der eine nominale Bodenfreiheit beibehält.

12. Anordnung nach Anspruch 10, **dadurch gekennzeichnet, dass** sie dazu ausgelegt ist, dass der erste Wagen (4), der zweite Wagen (5) und jeder zusätzliche Wagen (16) alle einen sogenannten Wagen mit veränderlicher Bodenfreiheit darstellen.

## Claims

1. Trolley assembly designed to be towed, comprising a first trolley (4) and a second trolley (5) each extending according to a predetermined direction of movement (14, 15) between a first side (40, 50) and a second side (41, 51),
the first trolley (4) and the second trolley (5) being connected by a hitch (6) located on the second side (41) of the first trolley (4) and on the first side (50) of the second trolley (5), which hitch (6) comprises a hook (61) and a tow bar (62) that can slide relative to one another such that the hitch allows an extended position in which the second side (41) of the first trolley (4) and the first side (50) of the second trolley (5) are spaced apart, and such that the hitch (6) allows a retracted position in which the second side (41) of the first trolley (4) and the first side (50) of the second trolley (5) are brought together,
the first trolley (4) and the second trolley (5) each comprising a first pair (7, 7') of wheels (70, 70') on the first side (40, 50) and each comprising a second pair (8, 8') of wheels (80, 80') on the second side (41, 51),
**characterised in that** the first trolley (4) and the second trolley (5) are configured for cooperating such that at least one of the two, referred to as a trolley having a variable relationship with the ground, has a relationship with the ground (S) that varies depending on whether the hitch (6) is in the extended or retracted position:
- when the hitch (6) is in the extended position, the first trolley (4) and the second trolley (5) each have a nominal relationship with the ground in which the wheels (70, 70') of the first pair (7, 7') of wheels are in contact with the ground (S) and can be freely oriented and the wheels (80, 80') of the second pair (8, 8') of wheels are in contact with the ground and stay oriented in the direction of movement (14, 15), and
- when the hitch (6) is in the retracted position, the first trolley (4) and the second trolley (5) each have said nominal relationship with the ground, except that the wheels (80, 80') of the second pair of wheels (8, 8') of the trolley having a variable relationship with the ground are lifted in order not to be contact with the ground (S) or can be freely oriented.

2. Assembly according to claim 1, **characterised in that** said first trolley (4) and said second trolley (5) are configured such that the second side (41) of the first trolley (4) mounts the first side (50) of the second trolley (5) when the hitch transitions from the extended position into the retracted position, with the wheels (80) of the second pair (8) of wheels of said trolley thus being lifted and not being in contact with the ground (S) when the hitch (6) is in the retracted position, whereby the first trolley (4) is a said trolley having a variable relationship with the ground.

3. Assembly according to claim 2, **characterised in that** said first trolley (4) comprises, on the second side (41) thereof, at least one guide (90) designed to slide and mount a chassis (52) of the second trolley (5).

4. Assembly according to any of claims 1 to 3, **characterised in that** said second trolley (5) comprises, for each wheel (80') of the second pair (8') of wheels, an element for locking a hub-retaining element, which retaining element is mounted so as to rotate around a vertical direction, which locking element is designed:
- in an active arrangement, to lock said hub-retaining element such that each wheel (80') of the second pair (8') of wheels is oriented in said direction of movement (15), and
- in an inactive arrangement, to allow said hub-retaining element to rotate in said vertical direction such that each wheel (80') of the second pair (8') of wheels can be freely oriented,
whereby the second trolley (5) is a trolley having a variable relationship with the ground.

5. Assembly according to claim 4, **characterised in that** said hub-retaining element comprises a notched ring (93), and said locking element comprises a bar (95) that is inserted into a notch (94) in the ring (93) in the active arrangement and is not inserted into the notch (94) in the inactive arrangement.

6. Assembly according to claim 5, **characterised in that** said bar (95) can pivot, about a pivot connection (96), between the active arrangement and the inactive arrangement.

7. Assembly according to any of claims 1 to 6, **characterised in that** it comprises a securing system between the second side (50) of the first trolley (5) and the first side (41) of the second trolley (5).

8. Assembly according to claim 7, **characterised in that** the securing system comprises a magnet (91).

9. Assembly according to either claim 7 or claim 8, **characterised in that** the securing system comprises a magnet (91) and a tab (92) positioned on the first trolley (4) and the second trolley (5), respectively.

10. Assembly according to any of claims 1 to 9, **characterised in that** it comprises, in addition to the first trolley (4) and the second trolley (5), at least one additional trolley (16) extending according to a predetermined direction of movement between a first side and a second side,
with each pair of adjacent trolleys (5, 16), other than the first trolley (4) and the second trolley (5), being connected by a hitch (17) in the same manner as the first trolley (4) and the second trolley (5),
each additional trolley (16) comprising a first pair of wheels on the first side and comprising a second pair of wheels on the second side,
the first trolley (4), the second trolley (5) and each additional trolley (16) being configured for cooperating such that at least one thereof, referred to as a trolley having a variable relationship with the ground, has a relationship with the ground (S) that varies depending on whether the hitch (6, 17) connecting it to an adjacent trolley is in the extended or retracted position:
- when the hitch (6, 17) is in the extended position, the trolley having a variable relationship with the ground and the adjacent trolley each have a nominal relationship with the ground in which the wheels of the first pair of wheels are in contact with the ground (S) and can be freely oriented and the wheels of the second pair of wheels are in contact with the ground and stay oriented in the direction of movement, and
- when the hitch (6, 17) is in the retracted position, the trolley having a variable relationship with the ground and the adjacent trolley each have said nominal relationship with the ground, except that the wheels of the second pair of wheels of the trolley having a variable relationship with the ground are lifted in order not to be contact with the ground (S) or can be freely oriented.

11. Assembly according to claim 10, **characterised in that** it is designed such that the first trolley (4), the second trolley (5) and each additional trolley (16) each constitute a trolley having a variable relationship with the ground, with the exception of one which maintains a nominal relationship with the ground.

12. Assembly according to claim 10, **characterised in that** it is configured such that the first trolley (4), the second trolley (5) and each additional trolley (16) each constitute a trolley having a variable relationship with the ground.
